Europäisches Patentamt

European Patent Office

Office européen des brevets

(19)

(11) EP 0 742 672 A2

(12) EUROPÄISCHE PATENTANMELDUNG

(43) Veröffentlichungstag:
13.11.1996 Patentblatt 1996/46

(51) Int Cl.⁶: **H04N 7/26**

(21) Anmeldenummer: 96201219.1

(22) Anmeldetag: 02.05.1996

(84) Benannte Vertragsstaaten:
**DE FR GB SE**

(30) Priorität: **06.05.1995 DE 19516742**

(71) Anmelder:
- **Philips Patentverwaltung GmbH**
  **22335 Hamburg (DE)**
  Benannte Vertragsstaaten:
  **DE**
- **Philips Electronics N.V.**
  **5621 BA Eindhoven (NL)**
  Benannte Vertragsstaaten:
  **FR GB SE**

(72) Erfinder:
- **Ibenthal, Achim**
  **22335 Hamburg (DE)**
- **Götting, Detlef,**
  **c/o Philips Patentverwaltung Gmbh**
  **22335 Hamburg (DE)**
- **Grigat, Rolf-Rainer Prof. Dr.-Ing.**
  **22335 Hamburg (DE)**

(74) Vertreter: **von Laue, Hanns-Ulrich, Dipl.-Ing. et al**
**Philips Patentverwaltung GmbH,**
**Röntgenstrasse 24**
**22335 Hamburg (DE)**

(54) **Verfahren zur Datenreduktion mittels fraktaler Bildkodierung**

(57) Bei einem Verfahren zur Datenreduktion eines Luminanz- und/oder Farbsignals eines digitalen Bildsignals mittels fraktaler Bildkodierung, bei der jedes Bild des Luminanz-/Farb-Signals in Rangeblöcke mit jeweils n x n Bildpunkten unterteilt wird, bei der für jeden Rangeblock ein Domainblock gesucht wird, der unter Anwendung einer Transformationsfunktion mit möglichst wenig Abweichung auf den Rangeblock abbildbar ist, wobei die Domainblöcke eine größere Größe als die Rangeblöcke aufweisen, und bei der Informationen über die Transformationsfunktionen übertragen werden, aus denen empfängerseitig in einem iterativen Prozeß die Bilddaten zurückgewonnen werden, ist zur Vereinfachung der Suche vorgesehen, daß bei der Suche nach demjenigen Domainblock, der auf einen Rangeblock unter Anwendung einer zugeordneten Transformationsfunktion mit geringstmöglicher Abweichung abbildbar ist. eine digitale Suchbaumstrategie eingesetzt wird.

FIG. 3a   FIG. 3b   FIG. 3c

FIG. 3d   FIG. 3e

**Beschreibung**

Die Erfindung betrifft ein Verfahren zur Datenreduktion eines Luminanz- und/oder Farbsignals eines digitalen Bildsignals mittels fraktaler Bildkodierung, bei der jedes Bild des Luminanz-/Farb-Signals in Rangeblöcke mit jeweils n x n Bildpunkten unterteilt wird, bei der für jeden Rangeblock ein Domainblock gesucht wird, der unter Anwendung einer Transformationsfunktion mit möglichst wenig Abweichung auf den Rangeblock abbildbar ist, wobei die Domainblöcke eine größere Größe als die Rangeblöcke aufweisen, und bei der Informationen über die Transformationsfunktionen übertragen werden, aus denen empfängerseitig in einem iterativen Prozeß die Bilddaten zurückgewonnen werden.

Ein Verfahren zur Datenreduktion eines Bildsignals oder von Komponenten eines Bildsignals mittels fraktaler Bildcodierung, bei dem ein Bild in Rangeblöcke und Domainblöcke unterteilt wird, ist aus "Image Coding Based on a Fractal Theory of Iterated Contractive Image Transformation, Arnaud E. Jacquin, IEEE Transactions on Image Processing, Vog. 1 (1), Seiten 18 bis 30, Januar 1992" bekannt. Gemäß Jacquin wird ein Bild eines Bildsignals in sogenannte Rangeblöcke zerlegt. Jedem Rangeblock wird eine Funktion zugeordnet, die für sich die Eigenschaft der Kontraktivität besitzen sollte und einen beliebigen, als Domainblock bezeichneten Block auf den Rangeblock abbildet. Diese Funktionen aller Rangeblöcke eines Bildes zusammen bilden ein sogenanntes Funktionensystem, das auch als iteratives Funktionensystem bezeichnet wird.

Encoderseitig besteht bei diesem Verfahren das Problem, daß für jeden Rangeblock ein Domainblock gefunden werden muß, der unter Anwendung der gefundenen Transformationen mit geringstmöglichen Fehlern auf den Rangeblock abbildbar ist. Dazu müssen alle fraglichen Domainblöcke auf diese Kriterien untersucht werden.

Dabei ist zu bedenken, daß die Domainblöcke grundsätzlich beliebig im Bild angeordnet sein können. Es ist also z.B. ein Block von 2n x 2n Bildpunkten nicht nur in seiner Ursprungslage zu untersuchen, sondern auch beispielsweise um 90°, 180° und 270° in verschiedenen Richtungen gedreht. Damit ergibt sich für den Suchvorgang eines geeigneten Domainblockes für jeden Rangeblock eines Bildes ein beträchtlicher Suchaufwand.

Aus "Fractal Image Compression", M.F. Barnsley, L. B. Hurd, Academic Press Professional 1993 ist ein Suchverfahren bekannt, bei dem für jeden Rangeblock auch jeder im Bild mögliche Domainblock untersucht wird und die optimale Abbildungsvorschrift für jedes dieser Paare berechnet wird. Der Aufwand hierfür ist jedoch beträchtlich. Bei einem Bild mit n x n Bildpunkten beträgt die Ordnung der Suchvorgänge $o(n^2)$.

Ferner ist aus "A Theory of Iterated Markov Operators with Applications to Digital Image Processing", von A.E. Jacquin, PhD Thesis, Georgia Institute of Technology, USA, 1989 ein Suchverfahren bekannt, bei dem die Domainböcke in verschiedene Klassen eingeteilt werden und nur in den Klassen passende Domainblöcke für einen Rangeblock gesucht werden, die zu dem Rangeblock paßten. Dieses Verfahren arbeitet zwar schneller als dasjenige von Barnsley, jedoch bleibt die Berechnungskomplexität weiter bei der Ordnung $o = n^2$.

Es ist Aufgabe der Erfindung, den Suchaufwand nach den Domainblöcken weiter zu verringern.

Diese Aufgabe ist erfindungsgemäß dadurch gelöst, daß bei der Suche nach demjenigen Domainblock, der auf einen Rangeblock unter Anwendung einer zugeordneten Transformationsfunktion mit geringstmöglicher Abweichung abbildbar ist, eine digitale Suchbaumstrategie eingesetzt wird.

Derartige Suchstrategien, bei denen ein Suchbaum erstellt wird, der anschließend für den Suchvorgang durchlaufen wird, sind an sich bekannt, beispielsweise aus "Multidimensional Binary Search Trees in Database Applications" von J.L. Bentley, IEEE Transactions on Software Engineering, Vol. SE-5, Nr. 4, Juli 1979, Seiten 333 bis 340. Diese Suchbaumstrategien können für Verfahren zur Datenreduktion eines Bildsignals mittels fraktaler Bildkodierung besonders vorteilhaft eingesetzt werden, da für die Suche nach geeigneten Domainblökken nicht mehr alle Blöcke durchsucht werden müssen und für die Bildkodierung nur vorgegebene, relativ kurze Zeiträume zur Verfügung stehen. Es wird ein Suchbaum aufgestellt, dessen Verzweigungen jeweils durch Merkmale der Domainblöcke, die durchsucht werden sollen, gebildet werden. Der Suchbaum wird durch Analyse aller dieser Merkmale aller Domainblöcke aufgestellt. Wird für einen bestimmten Rangeblock ein Domainblock gesucht, der unter Anwendung einer zugeordneten Transformationsfunktion mit möglichst geringer Abweichung auf den Rangeblock abbildbar ist, so werden für diesen Rangeblock die gleichen Merkmale gebildet, wie sie für die Domainblöcke bei der Bildung des Suchbaumes angewendet wurde. Der Suchbaum wird dann durch Vergleich der Merkmale der Rangeblöcke mit den in den Suchbaum eingetragenen Merkmalen der verschiedenen Domainblöcke durchlaufen, bis ein Endpunkt des Baumes erreicht wird. Derjenige Domainblock, der vor diesem Endpunkt liegt, weist Merkmale auf, die denen des Rangeblockes, für den der Domainblock gesucht wird, am nächsten kommen. Es handelt sich damit um den gesuchten Domainblock.

Durch die Anwendung dieser Suchbaumstrategie für die Probleme der fraktalen Bildkodierung ergibt sich eine deutliche Vereinfachung bzw. Verkürzung der Suche, da von der Wurzel des Suchbaumes bis zu einem Ende einer Verzweigung des Suchbaumes nur noch dieser eine Weg durchlaufen werden muß, d.h. es müssen nur alle Vergleiche für Domainblöcke vorgenommen werden, für die eine Verzweigung gebildet wurde, die auf diesem Suchzweig liegt. Alle anderen Domainblöcke müssen nicht untersucht werden. Anstelle der Suchstrategie nach dem Stande der Technik ergibt sich hier für die Berechnungskomplexität nur noch eine Ordnung von O (Log(n)), wobei $N^2$ gleich dem Produkt der Zahl der Bildpunkte eines Bildes ist.

Gemäß einer Ausgestaltung des Verfahrens ist vorgesehen, daß als Kriterien für den Suchbaumaufbau Merkmale der Domainblöcke verwendet werden, die gegenüber zugelassenen örtlichen Drehungen und/oder Spiegelungen der Domainblöcke invariant sind und daß die gleichen Merkmale für die Rangeblöcke eingesetzt werden.

Da bei dem Verfahren der Datenreduktion mittels fraktaler Bildkodierung im allgemeinen die Domainblöcke nicht nur in ihrer Ursprungslage, sondern auch in verschiedenen gedrehten und/oder gespiegelten Positionen mit den Rangeblöcken verglichen werden sollen, ergibt sich für die Suchbaumstrategie die Möglichkeit, die Merkmale der Domainblöcke in diesen verschiedenen gedrehten und/oder gespiegelten Positionen in den Suchbaum einzutragen. Erfindungsgemäß kann der Suchbaum weiter dadurch vereinfacht werden, daß für einen Domainblock Merkmale angewendet werden, die gegenüber einer Drehung und/oder gespiegelten Position dieses Domainblockes in verschiedenen Ebenen invariant sind. Das heißt diese Merkmale geben die Eigenschaften des Domainblockes in allen möglichen verschiedenen Lagen, die untersucht werden sollen, wieder. Damit muß ein Domainblock nur einmal in den Suchbaum eingetragen werden, auch wenn verschiedene Positionen dieses Domainblockes für den Vergleich mit den Rangeblöcken vorgenommen werden sollen.

Beispielsweise können die invarianten Merkmale gemäß einer weiteren Ausgestaltung der Erfindung auch dadurch gewonnen werden, daß die Bildpunkte eines Blocks in Kategorien eingeteilt werden, wobei die Bildpunkte einer Kategorie innerhalb des Blockes so angeordnet sind, daß sich die Bildpunkte dieser Kategorie nach einer der zulässigen Drehungen oder Spiegelungen des Blockes wieder an einem Ort eines Bildpunktes gleicher Kategorie befinden, und daß die Summe der Werte der Bildpunkte einer Kategorie jeweils ein invariantes Merkmal bildet.

In einem Block werden also die Bildpunkte in Kategorien unterteilt. Die Bildpunkte einer Kategorie zeichnen sich dadurch aus, daß ein bestimmter Bildpunkt nach einer der für den Block zulässigen Drehungen oder Spiegelungen wieder an einer Stelle des Blockes landet, an der sich zuvor ein Bildpunkt gleicher Kategorie befand. Damit werden also durch diese zulässigen Drehungen oder Spiegelungen die Bildpunkte einer Kategorie immer wieder auf Orte abgebildet, an denen sich zuvor ein Bildpunkt gleicher Kategorie befand. Je nach Größe der Blöcke können sich dabei verschieden viele Kategorien ergeben. Die Werte der Bildpunkte einer Kategorie werden aufaddiert. Diese Summe stellt ein invariantes Merkmal dar. Es kann damit so viele invariante Merkmale für den Block geben, wie verschiedene Kategorien möglich sind. Diese Art der Gewinnung der invarianten Merkmale stellt sicher, daß diese Merkmale gegenüber den zulässigen Drehungen bzw. Spiegelungen invariant sind.

Gemäß einer weiteren Ausgestaltung der Erfindung ist vorgesehen. daß nach Maßgabe der invarianten Merkmale aller Domainblöcke ein Suchbaum aufgebaut wird, der nachfolgend nach Maßgabe der gleichartigen invarianten Merkmale jedes Rangeblockes, für den ein Domainblock gesucht wird, durchlaufen wird bis ein Endpunkt (Blatt) des Suchbaumes erreicht wird und daß derjenige Domainblock, aufgrund dessen Merkmalen die zuletzt in dem Suchbaum durchlaufene Verzweigung in den Baum eingefügt wurde, den gesuchten Domainblock darstellt.

Ein nach Maßgabe der invarianten Merkmale der Domainblöcke aufgestellter Suchbaum wird für die Suche eines zu einem Rangeblock zugehörigen Domainblocks nur einmal durchlaufen. Dabei müssen für den Rangeblock die gleichen invarianten Merkmale, die also auf gleiche Weise ermittelt wurden wie für die Domainblöcke, verwendet werden. Diese Merkmale werden mit den Merkmalen der Domainblöcke, die als Verzweigungen in den Suchbaum eingetragen sind, verglichen. Es wird an jeder Verzweigung des Baumes ein Vergleich der dort eingetragenen Merkmale mit denen des Rangeblockes vorgenommen. Auf diese Weise wird ein Teil des Baumes durchlaufen, bis ein Ende, im allgemeinen als Blatt bezeichnet, erreicht ist. Die letzte Verzweigung vor diesem Blatt, die gemäß den Daten der Merkmale eines der Domainblöcke erstellt worden ist, gibt denjenigen Domainblock an, der den Merkmalen des Rangeblockes, für den ein Domainblock gesucht wird, am nächsten kommt. Damit ist derjenige Domainblock gefunden, der unter Anwendung der Transformationsfunktion mit geringstmöglicher Abweichung auf den Rangeblock abbildbar ist.

Für dieses Verfahren ist gemäß einer weiteren Ausgestaltung der Erfindung vorgesehen, daß die Knoten des Suchbaumes auf einer um eine Stufe höheren Ebene des Suchbaumes daraufhin untersucht werden, ob einer der Domainblöcke, aufgrund dessen Merkmalen einer dieser Knoten erstellt wurde, bezüglich aller seiner Merkmale näher an den Merkmalen des Rangeblockes liegt und daß gegebenfalls dieser Domainblock anstelle des Domainblockes gewählt wird, aufgrund dessen Merkmalen der Endpunkt erstellt wurde.

Wie oben erläutert wurde, kann im allgemeinen derjenige Domainblock als günstigster angenommen werden, aufgrund dessen Merkmalen die vorige Verzweigung erstellt wurde, die vor dem Endpunkt des Suchbaumes als letzte eingetragen wurde. In besonderen Fällen können jedoch auch die Merkmale anderer Domainblöcke dem Rangeblock, für den ein geeigneter Domainblock gesucht wird, näher kommen.

Hierfür ist gemäß einer weiteren Ausgestaltung der Erfindung vorgesehen, daß die Differenz zwischen dem Rangeblock und dem als günstigsten ermittelten Domainblock ermittelt wird, daß in dem Suchbaum bis zu einem Knoten zurückgegangen wird, dessen zugeordneter Domainblock diese Differenz nach allen Abweichungsrichtungen erreicht oder überschreitet, daß alle Domainblöcke des Unterbaumes zu diesem Knoten daraufhin untersucht werden, ob sie eine noch geringere Abweichung zu dem Rangeblock aufweisen als der ursprünglich als günstigster ermittelte Domainblock, und daß gegebenenfalls der günstigste Domainblock dieses Unterbaumes ausgewählt wird.

Gemäß einer weiteren Ausgestaltung der Erfindung ist vorgesehen, daß der Suchbaum als eindimensionaler Suchbaum aufgebaut wird, in dessen Knoten jeweils ein Wert desjenigen Merkmals eingetragen wird, dessen Wert am meisten von dem Mittelwert des in dem betreffenden Zweig des Baumes noch verbleibenden Wertebereichs des Merkmals abweicht.

Für die Domainblöcke und die Rangeblöcke werden im allgemeinen mehrere invariante Merkmale pro Block für die Suchbaumstrategie eingesetzt. Es kann ein entsprechender mehrdimensionaler Suchbaum gebildet werden. Zur weiteren Vereinfachung der Suche kann jedoch ein eindimensionaler Suchbaum gebildet werden, wobei an jeder Verzweigung des Suchbaumes nur jeweils eines der Merkmale der Blöcke berücksichtigt wird. Es wird dann bei der Bildung des Suchbaumes an einen neuen Knoten nur ein Wert desjenigen Merkmals eingetragen, dessen Wert am meisten von dem Mittelwert dieses Merkmales abweicht. Der Mittelwert ergibt sich dabei zunächst aus dem minimalen und dem maximalen Wert, den dieses Merkmal überhaupt annehmen kann. Ist das Merkmal in dem Baum vorher schon einmal eingetragen worden und hat aufgrund dieses Merkmales schon einmal eine Verzweigung in dem Baum stattgefunden, so wird nur der verbleibende Wertebereich betrachtet. Wurde z.B. ein Merkmal, dessen Wertebereich 0 bis n beträgt, schon einmal in den Suchbaum eingetragen, nämlich mit dem Wert n/2, so wird nachfolgend für dieses Merkmal links des Knotens nur noch der Wertebereich 0 bis n/2 und rechts des Knotens nur noch der Wertebereich n/2 bis n betrachtet.

Bei der Bildung des Baumes bzw. von dessen Verzweigungen wird jeweils dasjenige Merkmal ausgewählt, dessen Wert von dem nach oben erläuterten Kriterien berechneten Mittelwert am stärksten abweicht. Der Wert dieses Merkmals wird als neue Entscheidungsschwelle in die neu gebildete Verzweigung eingetragen.

Gemäß einer weiteren Ausgestaltung der Erfindung ist vorgesehen, daß die Daten jedes Rangeblocks auf geometrische Grundfunktionen untersucht werden, die die Datenstruktur des Rangeblockes möglichst gut angenähert wiedergeben, daß ein Differenzwert aus der gefundenen Grundfunktion, die die Datenstruktur des Rangeblockes am besten erfaßt, und den Daten des Rangeblocks berechnet wird, wobei dieser Differenzwert eine verbleibende Restrauhigkeit repräsentiert, daß die Daten der Domainblöcke auf geometrische Grundfunktionen untersucht werden, die die Datenstruktur des Domainblockes möglichst gut angenähert wiedergeben, daß ein Differenzwert aus der gefundenen Grundfunktion, die die Datenstruktur des Domainblockes am besten erfaßt, und den Daten des Domainblocks berechnet wird, wobei dieser Differenzwert eine verbleibende Restrauhigkeit repräsentiert,

daß die Suchbaumstrategie für die Suche des Domainblockes eingesetzt wird, der auf einen Rangeblock mit der geringsten Abweichung abbildbar ist, daß die zugeordnete Transformationsfunktion anhand der berechneten Differenzwerte des Rangeblockes und der berechneten Differenzwerte der Domainblöcke berechnet wird und daß für jeden Rangeblock Informationen über die miteinander verrechneten Grundfunktionen dieses Blocks, des als günstigsten ermittelten Domainblocks sowie die Transformationsfunktion, mittels derer der als günstigster ermittelte Domainblock auf den Rangeblock abbildbar ist, als datenreduzierter Datenstrom anstelle des Luminanz-/Farb-Signals übertragen werden.

Bei dieser Art der fraktalen Bildkodierung werden zunächst die Daten eines Rangeblockes, für den der günstigste Domainblock gesucht werden soll, auf geometrische Grundfunktionen untersucht. Dazu kann die Datenstruktur dieses Blocks beispielsweise in eine serielle Folge von Bilddaten, die die Bildpunkte dieses Blockes repräsentieren, umgeformt werden. Diese Folge von Bilddaten kann nun auf geometrische Grundfunktionen untersucht werden, die den Grundverlauf dieser Datenstruktur bereits wiedergeben. Es bleibt dann eine sogenannte Restrauhigkeit, die dadurch gebildet wird, daß aus den ursprünglichen Daten des Rangeblockes die Daten entsprechend der gefundenen geometrischen Grundfunktionen subtrahiert werden. Der dann entstehende Differenzwert, der die Restrauhigkeit bildet, wird dann bei der Suche nach einem geeigneten Domainblock verwendet.

In entsprechender Weise werden die Daten aller Domainblöcke, unter denen nun ein geeigneter gesucht wird, zunächst ebenfalls auf geometrische Grundfunktionen untersucht. Wird eine geeignete geometrische Grundfunktion, die die Datenstruktur der jeweiligen Domainblöcke jeweils näherungsweise wiedergibt, gefunden, so wird entsprechend dieser Funktion ein Grundanteil entsprechend der gefundenen geometrischen Grundfunktion von jedem Domainblock subtrahiert. Es verbleibt dann wiederum der Differenzwert, der die Restrauhigkeit erfaßt.

Der oben beschriebene Differenzwert der Restrauhigkeit des Rangeblockes wird nun mit den Differenzwerten aller Domainblöcke daraufhin verglichen, welcher dieser Domainblöcke unter Anwendung einer Transformationsfunktion den verbleibenden Differenzwert des Domainblockes möglichst fehlerarm auf den verbleibenden Differenzwert des Rangeblockes abbildet.

Wiedergabeseitig müssen dann diese Transformationsfunktionen, die das oben beschriebene Funktionensystem bilden, übertragen werden. Zusätzlich müssen Informationen über die geometrischen Grundfunktionen, die für den Rangeblock und den zugeordneten Domainblock gefunden wurden, übertragen werden. Diese Informationen können auch in Form einer Differenzbildung dieser beiden geometrischen Grundfunktionen übertragen werden.

Dadurch, daß bei der Suche eines geeigneten Domainblockes für jeden Rangeblock nicht mehr die gesamte Datenstruktur der Blöcke untersucht werden muß, sondern nur die oben beschriebenen Differenzwerte, die die Restrauhigkeit dieser Blöcke darstellen, nachdem die geometrische Grundfunktion von den Daten des Blockes subtrahiert wurde, ergibt sich eine vereinfachte Suche. Durch die Subtraktion der Grundfunktionen spielt für die Datenstruktur der verglichenen Blöcke beispielsweise deren absolute Amplitude, also Bildhelligkeit, keine Rolle. Entsprechendes gilt beispielsweise auch für übertragene Kanten. So kann eine Kante eines Rangeblockes zwar eine andere Kantenhöhe als beispielsweise eine ähnliche Kante eines Domainblockes haben, der Kantenverlauf als solcher ist aber ähnlich. Durch die Subtraktion der geometrischen Grundfunktionen werden damit quasi nur noch die Strukturen der Blöcke untersucht, nicht die absolute Amplitude oder Anordnung, die sich auch im Verlaufe des Bildinhaltes des Blockes entsprechend einer geometrischen Grundfunktion ändern kann. Damit ist der Suchvorgang erheblich erleichtert, da ähnliche Strukturen ohne Berücksichtigung von überlagerten geometrischen Grundfunktionen erheblich leichter zu finden sind.

Dieser Suchvorgang ist durch Einsatz der erfindungsgemäßen Suchbaumstrategie noch weiter zu vereinfachen, da einerseits für die Suche nur noch die Restrauhigkeiten relevant sind und andererseits diese Restrauhigkeiten auch nicht alle miteinander verglichen werden müssen. Für einen Rangeblock muß nur dessen Restrauhigkeit mit einem Teil der Restrauhigkeiten der Domainblöcke in dem Suchbaum verglichen werden.

Erfindungsgemäß ist für einen Encoder, der diese beiden Vereinfachungen der Suche geeigneter Domainblöcke in sich vereint vorgesehen, daß dieser Encoder nach der Bildung der Rangeblöcke und der Domainblöcke eine Abspaltung der günstigsten Grundfunktion für jeden Block vornimmt, anschließend für jeden Rangeblock anhand von dessen Differenzwert mittels der digitalen Suchbaumstrategie denjenigen Domainblock ermittelt, dessen Differenzwert mit geringstmöglicher Abweichnug unter Anwendung der Transformationsfunktion auf den Rangeblock abbildbar ist, daß der Encoder eine Verrechnung des Differenzwertes des Rangeblockes und des als günstigsten ermttelten Domainblockes vornimmt, und daß der Encoder diesen verrechneten Differenzwert sowie die Transformationsfunktion, mittels der der ermittelte günstigste Domainblock auf den Rangeblock abbildbar ist, als Ausgangssignal liefert.

Nachfolgend wird ein Ausführungsbeispiel für das erfindungsgemäße Verfahren sowie ein Encoder zur Durchführung des Verfahrens näher erläutert. Es zeigen:

Fig. 1 eine schematische Darstellung eines Suchbaumes,

Fig. 2 eine schematische Darstellung eines Rangeblockes und einiger Domainblöcke nach zwei invarianten Merkmalen $K_1$ und $K_2$,

Fig. 3 eine schematische Darstellung eines Suchbaumes für die Domainblöcke gemäß Fig. 2,

Fig. 4 eine schematische Darstellung eines Sonderfalles für die Suchbaumstrategie,

Fig. 5 eine schematische Darstellung eines Blockes zur Erläuterung einer möglichen Art der Gewinnung invarianter Merkmale und

Fig. 6 einen Encoder, der für den Vergleich von Rangeblöcken mit Domainblöcken deren Restrauhigkeit einsetzt und dabei die Suchbaumstrategie anwendet

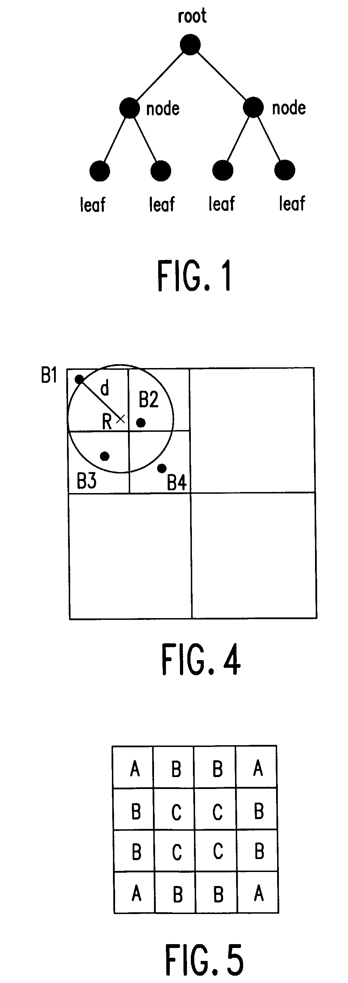

In Fig. 1 ist schematisch eine Grundstruktur eines Suchbaumes, wie er erfindungsgemäße für die Suche geeigneter Domainblöcke eingesetzt wird, dargestellt.

Der Suchbaum zeigt einen Ausgangspunkt, der als Root bezeichnet wird. Dieser Ausgangspunkt stellt in sich eine Verzweigung dar. Auf einer weiteren Ebene folgen weitere Knoten, die ebenfalls Verzweigungen darstellen. Es kann im Prinzip beliebig viele Ebenen mit Knoten dieser Art geben.

Es gibt schließlich eine letzte Ebene des Suchbaumes, in der es nur Endpunkte gibt, die ihrerseits keine weiteren Verzweigungen mehr bilden. Diese Endpunkte werden als Blätter bezeichnet.

An jeder der Verzweigungen findet eine Entscheidung nach einem bestimmten Merkmal statt.

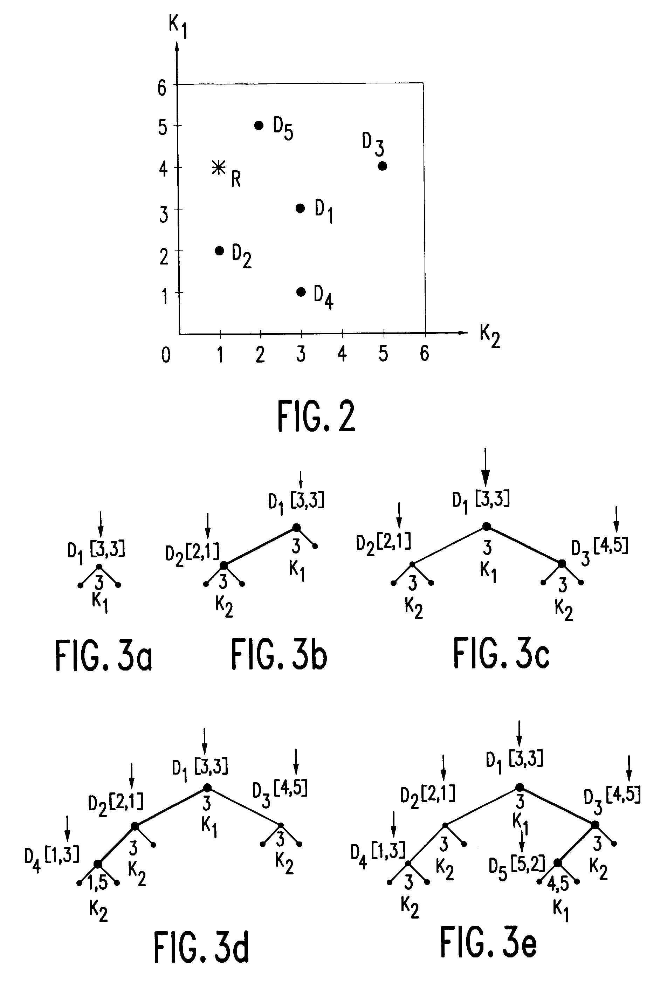

Nachfolgend wird der Aufbau eines derartigen Suchbaumes für verschiedene Domainblöcke anhand der Darstellung der Fig. 2 und 3 näher erläutert.

Fig. 2 zeigt eine schematische Darstellung, in der Domainblöcke $D_1$ bis $D_5$ auf einer von zwei Achsen aufgespannten Ebene eingetragen sind.

Dabei geben die beiden Achsen $K_1$ und $K_2$ des Diagrammes Werte für zwei invariante Merkmale dieser Domainblöcke an. Die Werte des invarianten Merkmals $K_1$ können einen Wertebereich von 0 bis 6 einnehmen; gleiches gilt für den Wertebereich des zweiten invarianten Merkmales $K_2$.

Jeder der Domainblöcke weist jeweils einen Wert für $K_1$ und $K_2$ auf. Die Domainblöcke $D_1$ bis $D_5$ sind entsprechend der Werte dieser beiden invarianten Merkmale in das Achsensystem gemäß Fig. 2 eingetragen. In Fig. 2 ist ebenfalls ein Rangeblock R eingetragen, dessen Merkmale $K_1$ und $K_2$ seine Position markieren.

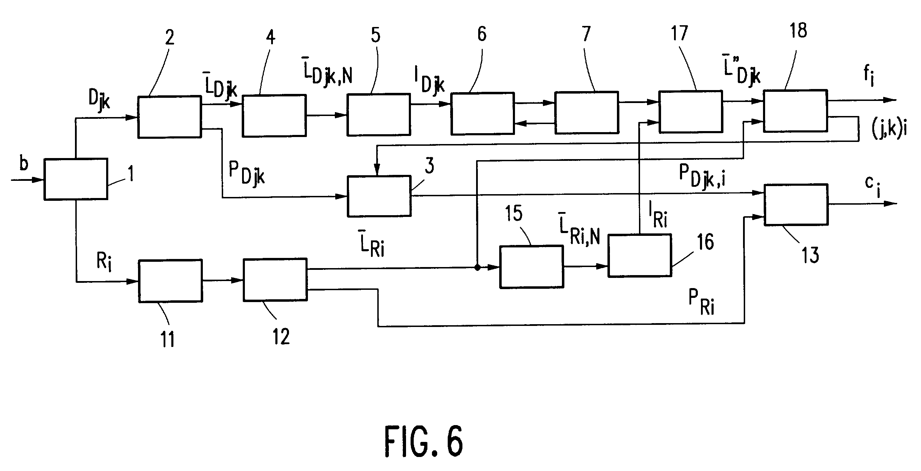

Es sind in der Fig. 2 beispielhaft zwei invariante Merkmale $K_1$ und $K_2$ eingetragen. Für jeden Block kann aber auch eine noch höhere Anzahl von invarianten Merkmalen für die Suchbaumstrategie herangezogen werden. Die invarianten Merkmale können grundsätzlich auf verschiedene Weise gewonnen werden. Eine vorteilhafte Möglichkeit besteht darin, für jeden Bildpunkt eines Blockes die Bildpunktwerte benachbarter Bildpunkte in Abhängigkeit von deren Abstand zu dem Bildpunkt mit einer Bewertungsfunktion zu beaufschlagen, diese bewerteten Werte zu potenzieren und aus den Summen dieser Potenzen den Mittelwert zu bilden. Es ergibt sich damit für jeden Bildpunkt eines Domainblockes ein solcher invarianter Wert. Damit gibt es für jeden Domainblock eine Anzahl invarianter Merkmale, deren Zahl der Bildpunkte des Domainblockes entspricht. Eine weitere Möglichkeit der Gewinnung der invarianten Merkmale wird weiter unten anhand der Darstellung in Fig. 5 erläutert werden.

In der schematischen Darstellung gemäß Fig. 3 soll nun erläutert werden, wie aus den Daten der beiden invarianten Merkmale $K_1$ und $K_2$ der Domainblöcke $D_1$ bis $D_5$ der Darstellung gemäß Fig. 2 ein eindimensionaler Suchbaum aufgebaut werden kann.

Der Aufbau eines eindimensionalen Suchbaumes ist wiederum nur eine Möglichkeit, ist jedoch anstelle eines mehrdimensionalen Suchbaumes, in dem für jedes Merkmal eine Dimension vorgesehen ist, erheblich einfacher.

In Fig. 3 sind mehrere Phasen der Entstehung dieses eindimensionalen Suchbaumes dargestellt, wobei bei jeder Phase eine zusätzliche Verzweigung entsprechend der Daten der Merkmale $K_1$ und $K_2$ eines Domainblockes zusätzlich eingefügt wurden.

Die Darstellung a) gemäß Fig. 3 zeigt zunächst eine Verzweigung. Diese ist aufgrund der Daten des Domainblockes $D_1$ entstanden. Sowohl Merkmal $K_1$ wie auch Merkmal $K_2$ weisen für diesen Domainblock den Wert 3 auf. Daher wurde für die Verzweigung gemäß Fig. 3a) das Merkmal $K_1$ gewählt. Als Wert wurde hier 3 eingetragen.

In der Darstellung gemäß Fig. 3b) ist diese Verzweigung dargestellt. Es soll nun der Domainblock $D_2$ in den entstehenden Suchbaum eingetragen werden. Es wird zunächst an der Verzweigung entsprechend den Daten $D_1$ eine Entscheidung vorgenommen. Da der Domainblock $D_2$ für das Merkmal $K_1$, für den die Entscheidung am Knoten $D_1$ vorgenommen wird, den Wert 2 aufweist, der kleiner als der in die Verzweigung eingetragene Wert $K_1 = 3$ ist, wird eine Verzweigung nach links, zu kleineren Werten hin vorgenommen. Es wird also ein neuer Knoten eingetragen, der den Werten 2 und 1 der Merkmale $K_1$ und $K_2$ des Domainblockes $D_2$ entspricht. Als Entscheidungsschwelle für diesen Knoten wird nun der Wert desjenigen Merkmales des Domainblockes $D_2$ gewählt, der im verbleibenden Wertebereich dieses Merkmales am stärksten von dem Mittelwert abweicht.

Für das Merkmal $K_1$ verbleibt an dieser Stelle nur noch der Wertebereich von 0 bis 3, da in dem ersten Knoten $D_1$ bereits eine Entscheidung < 3 vorgenommen

wurde. Der Domainblock $D_2$ weist für $K_1$ den Wert 2 auf. Der Mittelwert von 0 und 3 beträgt 1.5, so daß die Abweichung des Wertes $K_1 = 2$ des Domainblockes $D_2$ um 0,5 von dem Mittelwert. der sich aus der Differenz von 0 und 3 ergibt, abweicht. Das Merkmal $K_2$ des Domainblockes $D_2$ beträgt 1. Der noch zur Verfügung stehende Wertebereich für dieses Merkmal beträgt jedoch 0 bis 6, da bisher in keiner Verzweigung des Suchbaumes der Wertebereich dieses Merkmales eingeschränkt wurde. Der Mittelwert für $K_2$ beträgt also an dieser Stelle noch 3. Die Abweichung des Wertes $K_2 = 1$ des Domainblockes $D_2$ beträgt von diesem Mittelwert 2. Das heißt diese Abweichung des Wertes von $K_2$ von diesem Mittelwert ist größer als die ermittelte Abweichung 0,5 für das Merkmal $K_1$. Damit wird für die Verzweigung dieses Knotens das Merkmal $K_2$ ausgewählt. Es wird der noch verbleibende Mittelwert des Wertebereiches 0 bis 6, also 3 in den Knoten eingetragen.

Die Darstellung gemäß Fig. 3c) zeigt einen weiteren Knoten, der aufgrund der Werte der Merkmale $K_1$ und $K_2$ des weiteren Domainblocks $D_3$ entstanden ist. Für diesen Domainblock $D_3$ beträgt der Wert von $K_1 = 4$ und $K_2 = 5$. Es wird zunächst die Verzweigung $D_1$ passiert, bei der der Wert $K_1 = 4$ mit dem eingetragenen Wert für die Verzweigung von $K_1 = 3$ verglichen wird. Da der Wert 4 höher als 3 ist, wird für höhere Werte von $K_1$ der Suchbaum nach rechts weiter entwickelt. Es wird dort ein weiterer Knoten entsprechend dem Domainblock $D_3$ gebildet. Es muß hier nun wiederum ermittelt werden, welcher der Werte 4 für $K_1$ bzw. 5 für $K_2$ weiter von dem Mittelwert des noch verbleibenden Wertebereiches des jeweiligen Merkmales abweicht. Der Wert 4 von $K_1$ weicht um 0,5 von dem Mittelwert 4,5 des noch verbleibenden Wertebereiches 3 bis 6 für das Merkmal $K_1$ ab. Der Wert 5 für $K_2$ weicht hingegen um 2 von dem Mittelwert 3 des noch verbleibenden Wertebereiches 0 bis 6 des Merkmales $K_2$ ab. Damit wird als neue Entscheidungsschwelle der Mittelwert 3 des noch verbleibenden Wertebereiches des Merkmales $K_2$ eingetragen.

Die Darstellung gemäß Fig. 3d) zeigt eine weitere Phase der Entstehung des Suchbaumes, bei der nun der Domainblock $D_4$ bzw. dessen Werte für die Entstehung einer weiteren Verzweigung herangezogen werden.

Der Wert $K_1 = 1$ des Domainblocks 4 führt dazu, daß sowohl die Verzweigung $D_1$ wie auch die Verzweigung $D_2$ jeweils nach links passiert werden, da im Knoten $D_1$ der Wert für $K_1$ kleiner als der Entscheidungswert $K_1 = 3$ ist und im Knoten $D_2$ der Wert 2 für $K_2$ gleich dem Entscheidungswert ist (bei Aquivalenz mit dem Entscheidungswert wird links fortgefahren). Es wird am Ende der linken Verzweigung des Quotens $D_2$ eine neue Verzweigung eingetragen. An dieser Stelle verbleiben für den möglichen Wertebereich von $K_1$ der Wertebereich 0 bis 3 und für den Wertebereich des Merkmals $K_2$ ebenfalls der Wertebereich 0 bis 3.

Für beide Wertebereiche ist also der Mittelwert 1,5, wobei der Wert $3 = K_2$ des Domainblockes 4 stärker von diesem Mittelwert abweicht als der Wert 1 des Merkmales $K_1$. Damit wird als neuer Entscheidungswert für diesen Knoten der Mittelwert 1,5 des noch verbleibenden Wertebereiches 0 bis 3 des Merkmals $K_2$ gewählt.

Fig. 3e) zeigt schließlich die Eintragung eines Knotens für den letzten Domainblock $D_5$. Dessen Wert für $K_1 = 5$ liegt oberhalb der Entscheidungsschwelle $K_1 = 3$ des Knotens $D_1$, so daß zunächst die Verzweigung nach rechts gewählt wird. An der Verzweigung $D_3$ wird jedoch der Weg nach links gewählt, da der Wert $K_2 = 2$ von $D_5$ kleiner ist als die Entscheidungsschwelle 3 für $K_2$ an dem Knoten $D_3$. An der neu einzutragenden Verzweigung verbleiben für den Wertebereich von $K_1$ der Bereich 3 bis 6, der einen Mittelwert 4,5 aufweist. Für den Wertebereich von $K_2$ verbleibt der Wertebereich von 0 bis 3, der einen Mittelwert von 1,5 aufweist. In diesen Fällen weichen die Werte 5 für $K_1$ und 2 für $K_2$ des Domainblockes 5 in gleicher Weise von den Mittelwerten 4,5 bzw. 1,5 ab, so daß hier (als eine mögliche Alternative) in die Verzweigung der Mittelwert 4,5 für das Merkmal $K_1$ eingetragen wurde.

Dieser in Fig. 3 schematisch dargestellte Aufbau des Suchbaumes kann im Prinzip für eine beliebige Anzahl von Domainblöcken eines Bildes nach oben beschriebener Weise vorgenommen werden.

Wird für einen Rangeblock eines Bildes derjenige Domainblock des Bildes gesucht, der ggf. unter Drehung in verschiedenen Ebenen mittels einer Transformationsfunktion mit den geringstmöglichen Abweichungen auf diesen Rangeblock abgebildet werden kann, so werden für diesen Rangeblock die gleichen Merkmale $K_1$ und $K_2$ wie für die Domainblöcke gebildet. Entsprechend den Werten dieser Merkmale $K_1$ und $K_2$ wird der Suchbaum, beispielsweise gemäß Fig. 3e), durchlaufen. Nach dem Durchlaufen des Suchbaumes wird schließlich ein Endpunkt erreicht. Diesem Endpunkt ist eine Verzweigung vorher gefolgt, die also die letzte Verzweigung dargestellt, die vor dem Erreichen des Endpunktes passiert wurde. Diese Verzweigung gibt denjenigen Domainblock an, dessen Merkmale $K_1$ und $K_2$ den Merkmalen des Rangeblockes, für den ein Domainblock gesucht wird, am nächsten kommt. Es ist damit der für die fraktale Bildkodierung gesuchte Domainblock gefunden, der mit den geringstmöglichen Abweichungen auf den Rangeblock abgebildet werden kann.

Infolge der Vereinfachung durch die Suchbaumstrategie, insbesondere durch die Wahl eines eindimensionalen Suchbaumes, kann es in besonderen Fällen Konstellationen geben, bei denen dieser Domainblock, aufgrund dessen die letzte Verzweigung vor Erreichen des Endes des Suchbaums erstellt wurde, nicht der nächste ist, d.h. nicht derjenige Domainblock ist, dessen Merkmale den Merkmalen des Rangeblockes, für den der Domainblock gesucht wird, am nächsten kommen.

Ein derartiger Beispielsfall ist in Fig. 4 schematisch dargestellt. Entsprechend der Darstellung in Fig. 2 sind dort verschiedene Ortspunkte eines Rangeblockes R und verschiedene Domainblöcke B1 bis B4 entsprechend der Werte ihrer Merkmale $K_1$ und $K_2$ dargestellt.

Aufgrund des Aufbaues eines Suchbaumes würden für den Rangeblock R als günstigster der Domainblock B1 ermittelt werden, da dieser in dem gleichen Quadranten, entsprechend der feinsten Aufteilung, die der Suchbaum gestattet, ermittelt werden. Die Fig. 4 zeigt jedoch, daß die Daten der Merkmale $K_1$ und $K_2$ des Rangeblockes B2 tatsächlich den Merkmalen des Rangeblockes R näher sind. In diesem Falle wäre also der gefundene Domainblock B1 nicht der optimale. Die Suche nach dem optimalen Rangeblock, der in dem in Fig. 4 gewählten Beispielsfalle der Domainblock B2 wäre, kann dadurch vorgenommen werden, daß auf derjenigen Ebene des an sich als optimal ermittelten Rangeblockes B1 die Daten der Merkmale all derjeniger Domainblöcke, aufgrund derer Verzweigungen in dieser Ebene entstanden sind, mit den Daten des Rangeblockes verglichen werden. Es wird also auf die letzte Knotenebene zurückgegangen, auf deren Ebene der gefundene B1 Block liegt. Es werden alle Verzweigungen dieser Ebene untersucht und diejenigen Domainblöcke mit dem Rangeblock verglichen, aufgrund deren Daten bei der Entstehung des Suchbaumes eine Verzweigung auf dieser Ebene in den Suchbaum eingetragen wurde.

In Fig. 5 ist schematisch ein Block mit 4 x 4 Bildpunkten dargestellt. Es kann sich bei diesem Block sowohl um einen Rangeblock wie um einen Domainblock handeln. Anhand der Darstellung gemäß Fig. 5 soll eine Möglichkeit zur Gewinnung invarianter Merkmale für diesen Block erläutert werden.

Es besteht die Möglichkeit die invarianten Merkmale dadurch zu gewinnen, daß die Bildpunkte eines Blockes in verschiedene Kategorien unterteilt werden. Dabei gehören jeweils solche Bildpunkte einer gleichen Kategorie an, die nach einer der zulässigen Drehungen oder Spiegelungen des Blockes wieder an einer Position landen, an der sich zuvor ein Bildpunkt gleicher Kategorie befand.

Die Darstellung gemäß Fig. 5 zeigt, daß die Bildpunkte der jeweils äußeren Ecken in eine erste Kategorie A eingeteilt wurden. Wird der Block um 90°, 180° oder 270° gedreht, oder wird er an einer der Längsachsen gespiegelt, so werden Bildpunkte der Kategorie A wiederum auf einen Ort innerhalb des Blockes abgebildet, an dem sich zuvor ein Bildpunkt der gleichen Kategorie A befand.

Entsprechendes gilt für die Bildpunkt der Kategorie B, die an ihren äußeren Rändern des Blockes zwischen den Bildpunkten der Kategorie A angeordnet sind. Ebenfalls werden die Bildpunkte der Kategorie C, die in den zentralen vier Positionen des Blockes angeordnet sind, immer wieder auf Orte von Bildpunkten gleicher Kategorie abgebildet.

Für das in Fig. 5 dargestellte Beispiel eines Blockes mit 4 x 4 Bildpunkten ergeben sich somit drei mögliche Kategorien. Die Bildpunktwerte der Bildpunkte einer Kategorie werden aufaddiert. Bei drei Kategorien ergeben sich auf diese Weise drei Summen, die jeweils ein invariantes Merkmal darstellen. In dem Ausführungsbeispiel gemäß Fig. 5 gibt es also ein invariantes Merkmal, das sich aus der Summe der Bildpunktwerte der Bildpunkte der Kategorie A ergibt, sowie zwei weitere invariante Merkmale der entsprechenden Summen der Bildpunkte der Kategorien B und C.

In Fig. 6 ist ein Ausführungsbeispiel für einen Encoder in Form eines Blockschaltbildes schematisch dargestellt. Dieser Encoder arbeitet mit einer Suchbaumstrategie entsprechend der Erfindung. Zusätzlich wird in diesem Encoder die Suche nach geeigneten Domainblöcken dadurch vereinfacht, daß vor Vergleich der Rangeblöcke mit den Domainblöcken geometrische Grundfunktionen von den Daten der Bildpunkte sowohl der Rangeblöcke wie auch der Domainblöcke subtrahiert werden. Nur die verbleibende Oberflächenstruktur der Domainblöcke bzw. der Rangeblöcke wird anschließend miteinander verglichen.

Dem in Fig. 6 dargestellten Encoder wird eingangsseitig ein digitales Bildsignal b zugeführt, bei dem es sich um ein zeilenweise ausgelesenes Bild handelt, das in Form digitaler Daten vorliegt. In dem Bildsignal liegen die Bilddaten der einzelnen Bildpunkte also zeitlich aufeinander folgend vor.

Dieses Bildsignal gelangt in dem Encoder zu einem Schaltungsblock 1, in dem eine Blockbildung vorgenommen wird. In den Daten aller Bildpunkte eines Bildes werden sogenannte Rangeblöcke $R_i$ und sogenannte Domainblöcke $D_{jk}$ festgelegt. Die Rangeblöcke umfassen jeweils n x n Bildpunkte. Alle Rangeblöcke zusammen erfassen den gesamten Bildinhalt eines Bildes. Die Domainblöcke weisen eine Größe von 2n x 2n auf. Im Ergebnis werden durch den Encoder Domainblöcke gesucht, die sich möglichst gut, d.h. mit möglichst wenig Fehlern, auf die Rangeblöcke abbilden lassen. Dieser Vorgang wird für jeden einzelnen Rangeblock vorgenommen.

Dabei wird für jeden Rangeblock nicht nur der Domainblock in seiner ursprünglichen Form verglichen, sondern es werden Abbildungsfunktionen gesucht, bei deren Anwendung der Domainblock optimal auf einen jeweiligen Rangeblock abgebildet wird. Der Encoder liefert letztlich als Ausgangssignal diese Funktionen.

In der Figur sind die Domainblöcke mit $D_{jk}$ und die Rangeblöcke mit $R_i$ gekennzeichnet.

Die Daten der Domainblöcke $D_{jk}$ werden in dem Schaltungselement 2 seriell aufgereiht, d.h. die Bildpunktes eines Blockes werden sequentiell aufgereiht. Ferner ist eine Anordnung in diesem Block vorgesehen, die der Abspaltung der Grundfunktionen bzw. Polynomterme dient. Dieser hat die Aufgabe, diejenigen Grundfunktionen, oder im speziellen Fall Polynomterme, zu finden und abzuspalten. die am besten den tatsächlichen Bildverlauf des betreffenden Blockes annähern. Diese Polynomterme sind in Fig. 6 mit $P_{Djk}$ bezeichnet.

Der verbleibende Teil des Bildes, also die Differenz zwischen dem tatsächlichen Bildinhalt und den Polynomtermen, der im folgenden als Restrauhigkeit bezeichnet wird, ist in der Figur als $\bar{L}_{Djk}$ bezeichnet.

Die Polynomterme $P_{Djk}$ werden in einen Zwischenspeicher 3 eingelesen. Die Restrauhigkeiten $\bar{L}''_{Djk}$ werden in einem Block 4 zur Normierung zugeführt. In diesem Block wird die Restrauhigkeit auf den Betrag 1 normiert.

Die normierten Restrauhigkeiten $\bar{L}_{Djk,N}$ gelangen an einen weiteren Schaltungsblock 5, in dem eine Berechnung der oben beschriebenen Invarianten vorgenommen wird. Dies kann beispielsweise in oben beschriebener Art dadurch geschehen, daß für jeden Bildpunkt eines Blockes die Bildpunktwerte benachbarter Bildpunkte in Abhängigkeit ihres Abstands von dem Bildpunkt bewertet werden, die Potenz dieser bewerteten Bildpunktwerte gebildet wird und aus den Potenzen der Mittelwert gebildet wird. Die so berechneten Invarianten $I_{Djk}$ werden in einem weiteren Schaltungsblock für den Aufbau eines Suchbaumes herangezogen. Dieser Suchbaum kann beispielsweise entsprechend der schematischen Darstellung der Fig. 2 und 3 vorgenommen werden.

Dieser so gebildete Suchbaum wird in einem Speicher 7 abgespeichert.

Durch die Abspaltung der Polynomterme $P_{Djk}$ ist für den Aufbau dieses Suchbaumes nur noch die Restrauhigkeit maßgebend. Aufgrund der Restrauhigkeit werden die invarianten Merkmale $I_{Djk}$ gebildet, anhand derer der Suchbaum aufgebaut wird.

Die in dem Schaltungsblock 1 abgespaltenen Rangeblöcke $R_i$ werden in einem Schaltungsblock 11 zwischengespeichert, dem ein Schaltungsblock 12 zur Aufspaltung nachgeschaltet ist. In diesem werden die Rangeblöcke in entsprechender Weise in Polynomterme $P_{Ri}$, die einem Schaltungsblock 13 zur Parameterverrechnung zugeführt werden und in die Restrauhigkeiten $\bar{L}_{Ri}$ aufgespalten. Diese werden einerseits einem Schaltungsblock 15 zur Normierung zugeführt, in dem eine Normierung auf den Betrag 1 durchgeführt wird.

Die normierten Restrauhigkeiten $\bar{L}_{Ri,N}$ gelangen an einen Schaltungsblock 16, in dem die Invariantenberechnung vorgenommen wird. Die Invariantenberechnung für die Restrauhigkeiten der Rangeblöcke muß dabei in gleicher Weise vorgenommen werden, wie die Invariantenberechnung für die Domainblöcke in dem Schaltungsblock 5 vorgenommen wird.

Dem Speicher 7, in dem der aufgrund der Daten der Invarianten der Domainblöcke gebildete Suchbaum abgespeichert ist, ist ein Schaltungsblock 17 zur Baumsuche nachgeschaltet.

Der Schaltungsblock 17 zieht den in dem Baumspeicher 7 abgespeicherten Suchbaum heran und setzt die Invarianten $I_{Ri}$ der Rangeblöcke, die von dem Schaltungsblock 16 geliefert werden, zur Baumsuche ein. Entsprechend der Werte der Invarianten dieser Rangeblöcke wird zu jedem Rangeblock mit Hilfe des digitalen Suchbaumes derjenige Domainblock gesucht, dessen Bildpunktwerte sich mit der geringsten Abweichung unter Anwendung einer Transformationsfunktion auf den Rangeblock abbilden lassen. Die Baumsuche findet beispielsweise in der Weise statt, wie oben unter Fig. 4 beschrieben wurde.

Der Encoder gemäß Fig. 6 weist einen Schaltungsblock 18 auf, der ausgangsseitig einerseits eine in der Figur mit $f_i$ bezeichnetes Signal, welches den optimalen Domainblock, dessen örtliche Variation sowie die zugehörige Transformationsfunktion angibt. Der Block 7 liefert außerdem die Adresse des Domainblockes, der als optimaler Block für einen Rangeblock gefunden wurde. Diese Adresse wird dem Parameterspeicher 3 zugeführt, aus dem die Parameter des gefundenen Domainblocks ausgelesen werden. Diese Parameter sind in der Fig. 6 mit $P_{Djk,i}$ gekennzeichnet. Diese gelangen an das Schaltungselement 13, in dem diese Polynomterme der Domainblöcke mit den Polynomtermen $P_{Ri}$ der Rangeblöcke verrechnet werden. Die verrechneten Werte der Polynomterme sind in der Figur mit $C_i$ gekennzeichnet. Diese werden ebenfalls zur Wiedergabeseite übertragen.

In einem in der Fig. 6 nicht dargestellten Decoder können diese verrechneten Polynomterme $C_i$ sowie die Daten $f_i$ der jeweils gefundenen Domainblöcke zur Wiederherstellung der Rangeblöcke durch Abbildung gefunden werden. Diese Abbildung muß iterativ vorgenommen werden, bis der Rangeblock in seiner ursprünglichen Form wieder hergestellt ist.

Der Encoder gemäß Fig. 6 weist den Vorteil auf, daß die Suche nach einem jeweils geeigneten Domainblock, dessen Daten mit geringstmöglicher Abweichung auf einen Rangeblock unter Anwendung einer Transformationsfunktion abgebildet werden können, in zweierlei Weise vereinfacht ist. Einerseits muß für den Suchvorgang nicht mehr der unveränderte Wertevorrat eines jeden Blockes herangezogen werden, da von den Werten geometrische Grundfunktionen, beispielsweise Polynome, subtrahiert werden. Nur die verbleibenden Restrauhigkeiten müssen für den Suchvorgang berücksichtigt werden. Bei dem Vergleich dieser Restrauhigkeiten wird durch die Anwendung der digitalen Suchbaumstrategie eine weitere wesentliche Vereinfachung erzielt.

**Patentansprüche**

1. Verfahren zur Datenreduktion eines Luminanz- und/oder Farbsignals eines digitalen Bildsignals mittels fraktaler Bildkodierung, bei der jedes Bild des Luminanz-/Farb-Signals in Rangeblöcke mit jeweils n x n Bildpunkten unterteilt wird, bei der für jeden Rangeblock ein Domainblock gesucht wird, der unter Anwendung einer Transformationsfunktion mit möglichst wenig Abweichung auf den Rangeblock abbildbar ist, wobei die Domainblöcke eine größere Größe als die Rangeblöcke aufweisen, und bei der Informationen über die Transformationsfunktionen übertragen werden, aus denen empfängerseitig in einem iterativen Prozeß die Bilddaten zurückgewonnen werden, dadurch gekennzeichnet, daß bei der Suche nach demjenigen Domainblock, der auf einen Rangeblock unter Anwendung einer zugeordneten Transformationsfunktion mit geringstmöglicher Abweichung abbildbar ist, eine digitale Suchbaumstrategie eingesetzt wird.

2. Verfahren nach Anspruch 1, dadurch gekennzeichnet, daß als Kriterien für den Suchbaumaufbau Merkmale der Domainblöcke verwendet werden, die gegenüber örtlicher Drehung der Domainblöcke invariant sind und daß die gleichen Merkmale für die Rangeblöcke eingesetzt werden.

3. Verfahren nach Anspruch 2, dadurch gekennzeichnet, daß die invarianten Merkmale in der Weise erzeugt werden, daß die Bildpunkte eines Blocks in Kategorien eingeteilt werden, wobei die Bildpunkte einer Kategorie innerhalb des Blockes so angeordnet sind, daß sich die Bildpunkte dieser Kategorie nach einer der zulässigen Drehungen oder Spiegelungen des Blockes wieder an einem Ort eines Bildpunktes gleicher Kategorie befinden, und daß die Summe der Werte der Bildpunkte einer Kategorie jeweils ein invariantes Merkmal bildet.

4. Verfahren nach einem der Ansprüche 1 bis 3, dadurch gekennzeichnet, daß nach Maßgabe der invarianten Merkmale aller Domainblöcke ein Suchbaum aufgebaut wird, der nachfolgend nach Maßgabe der gleichartigen invarianten Merkmale jedes Rangeblockes, für den ein Domainblock gesucht wird, durchlaufen wird bis ein Endpunkt (Blatt) des Suchbaumes erreicht wird und daß derjenige Domainblock, aufgrund dessen Merkmalen die zuletzt in dem Suchbaum durchlaufene Verzweigung in den Baum eingefügt wurde, den gesuchten Domainblock darstellt.

5. Verfahren nach Anspruch 4, dadurch gekennzeichnet, daß die Differenz zwischen dem Rangeblock und dem als günstigsten ermittelten Domainblock ermittelt wird, daß in dem Suchbaum bis zu einem Knoten zurückgegangen wird, dessen zugeordneter Domainblock diese Differenz nach allen Abweichungsrichtungen erreicht oder überschreitet, daß alle Domainblöcke des Unterbaumes zu diesem Knoten daraufhin untersucht werden, ob sie eine noch geringere Abweichung zu dem Rangeblock aufweisen als der ursprünglich als günstigster ermittelte Domainblock, und daß gegebenenfalls der günstigste Domainblock dieses Unterbaumes ausgewählt wird.

**6.** Verfahren nach einem der Ansprüche 1 bis 5, <u>dadurch gekennzeichnet</u>,
daß der Suchbaum als eindimensionaler Suchbaum aufgebaut wird, in dessen Knoten jeweils ein Wert desjenigen Merkmals eingetragen wird, dessen Wert am meisten von dem Mittelwert des in dem betreffenden Zweig des Baumes noch verbleibenden Wertebereichs des Merkmals abweicht.

**7.** Verfahren nach einem der Anprüche 1 bis 6, <u>dadurch gekennzeichnet</u>,

daß die Daten jedes Rangeblocks auf geometrische Grundfunktionen untersucht werden, die die Datenstruktur des Rangeblockes möglichst gut angenähert wiedergeben, daß ein Differenzwert aus der gefundenen Grundfunktion, die die Datenstruktur des Rangeblockes am besten erfaßt, und den Daten des Rangeblocks berechnet wird, wobei dieser Differenzwert eine verbleibende Restrauhigkeit repräsentiert, daß die Daten der Domainblöcke auf geometrische Grundfunktionen untersucht werden, die die Datenstruktur des Domainblockes möglichst gut angenähert wiedergeben, daß ein Differenzwert aus der gefundenen Grundfunktion, die die Datenstruktur des Domainblockes am besten erfaßt, und den Daten des Domainblocks berechnet wird, wobei dieser Differenzwert eine verbleibende Restrauhigkeit repräsentiert,
daß die Suchbaumstrategie für die Suche des Domainblockes eingesetzt wird, der auf einen Rangeblock mit der geringsten Abweichung abbildbar ist,
daß die zugeordnete Transformationsfunktion anhand der berechneten Differenzwerte des Rangeblockes und der berechneten Differenzwerte der Domainblöcke berechnet wird
und daß für jeden Rangeblock Informationen über die miteinander verrechneten Grundfunktionen dieses Blocks, des als günstigsten ermittelten Domainblocks sowie die Transformationsfunktion, mittels derer der als günstigster ermittelte Domainblock auf den Rangeblock abbildbar ist, als datenreduzierter Datenstrom anstelle des Luminanz-/Farb-Signals übertragen werden.

**8.** Encoder zur Durchführung des Verfahrens nach Anspruch 7, <u>dadurch gekennzeichnet</u>,
daß der Encoder nach Bildung der Rangeblöcke und der Domainblöcke eine Abspaltung der günstigsten Grundfunktion für jeden Block vornimmt, anschließend für jeden Rangeblock anhand von dessen Differenzwert mittels der digitalen Suchbaumstrategie denjenigen Domainblock ermittelt, dessen Differenzwert mit geringstmöglicher Abweichung unter Anwendung der Transformationsfunktion auf den Rangeblock abbildbar ist, daß der Encoder eine Verrechnung des Differenzwertes des Rangeblockes und des als günstigsten ermittelten Domainblockes vornimmt, und daß der Encoder diesen verrechneten Differenzwert sowie die Transformationsfunktion, mittels der der ermittelte günstigste Domainblock auf den Rangeblock abbildbar ist, als Ausgangssignal liefert.

FIG. 1

FIG. 4

FIG. 5

FIG. 2

FIG. 3a    FIG. 3b    FIG. 3c

FIG. 3d    FIG. 3e

FIG.6